# EUROPEAN PATENT APPLICATION

(11) **EP 2 237 213 A1**
(43) Date of publication of application: **06.10.2010**
(21) Application number: 10153954.2
(22) Date of filing: 18.02.2010
(51) Int. Cl.: G06Q 30/00

(54) **A method for providing a customized concatenated music workout-energizing anthology**

(30) Priority: 30.03.2009 US 383995
(71) Applicant: Abiri, Roni, DN Shikmim (IL)
(72) Inventor: Abiri, Roni, DN Shikmim (IL)
(74) Representative: Evens, Paul Jonathan

(57) **Abstract**

A method for providing a customized concatenated music workout-energizing anthology, the method including entering into a computer, via a user interface, personal workout parameters including at least one of type of workout and duration of workout, employing the computer to select multiple pieces of music from a music database, employing the computer to concatenate the multiple pieces of music in an order which is adapted to correspond to the personal workout parameters; entering into the computer, via an advertiser interface, audio advertisement content; employing the computer to concatenate advertisements, including at least part of the audio advertisement content, at advertisement concatenation locations between various ones of the multiple pieces of music and employing the computer to download to a portable workout-energizing device a resulting customized concatenated music workout-energizing anthology.

## Description

### FIELD OF THE INVENTION

The present invention relates generally to exercise and workout systems and methodologies.

### BACKGROUND OF THE INVENTION

The following published documents are believed to represent the current state of the art:
U.S. Patent Nos. 6,611,813 and 5,931,901; and
MP Train: a mobile, music and physiology based personal trainer; ACM International Conference Proceeding Series, Vol. 159, 2006; Proceedings of the 8th Conference on Human-computer interaction with mobile devices and services, pages 21-28.

### SUMMARY OF THE INVENTION

The present invention seeks to provide improved exercise and workout systems and methodologies.

There is thus provided in accordance with a preferred embodiment of the present invention a method for providing a customized concatenated music workout-energizing anthology, the method including entering into a computer, via a user interface, personal workout parameters including at least one of type of workout and duration of workout, employing the computer to select multiple pieces of music from a music database, employing the computer to concatenate the multiple pieces of music in an order which is adapted to correspond to the personal workout parameters; entering into the computer, via an advertiser interface, audio advertisement content; employing the computer to concatenate advertisements, including at least part of the audio advertisement content, at advertisement concatenation locations between various ones of the multiple pieces of music and employing the computer to download to a portable workout-energizing device a resulting customized concatenated music workout-energizing anthology.

Preferably, the method also includes employing the computer to modify the key of at least some of ones of the multiple pieces of music and advertisements. Additionally or alternatively, the method also includes employing the computer to modify at least some of ones of the multiple pieces of music and advertisements to provide a tempo which corresponds to the personal workout parameters. Additionally or alternatively, the employing the computer to modify at least some of ones of the multiple pieces of music and advertisements to provide a tempo includes at least one of tempo matching and harmonic matching between an advertisement and music concatenated therewith.

In accordance with a preferred embodiment of the present invention at least one of the employing the computer to modify the key and the employing the computer to modify at least some of ones of the multiple pieces of music and advertisements to provide a tempo includes at least one of tempo mismatching and harmonic mismatching between an advertisement and music concatenated therewith.

Preferably, the advertisements are customized in accordance with the personal workout parameters.

There is also provided in accordance with another preferred embodiment of the present invention a system for providing a customized concatenated music workout-energizing anthology, the system including audio advertisement storage functionality and a computer operative to receive, via a user interface, personal workout parameters including at least one of type of workout and duration of workout, to select multiple pieces of music from a music database and to receive audio advertisements, the computer including concatenation functionality operative to concatenate the audio advertisements at advertisement concatenation locations between various ones of the multiple pieces of music and download functionality operative to download to a portable workout-energizing device a resulting customized concatenated music workout-energizing anthology.

Preferably, the computer is also operative to modify the key of at least some of ones of the multiple pieces of music and advertisements. Additionally or alternatively, the computer is also operative to modify at least some of ones of the multiple pieces of music and advertisements to provide a tempo which corresponds to the personal workout parameters. Alternatively or additionally, the computer includes at least one of tempo matching functionality and harmonic matching functionality operative to provide at least one of tempo matching and harmonic matching between an advertisement and music concatenated therewith. Alternatively or additionally, the computer includes at least one of tempo mismatching functionality and harmonic mismatching functionality operative to provide at least one of tempo mismatching and harmonic mismatching between an advertisement and music concatenated therewith.

In accordance with a preferred embodiment of the present invention the advertisements are customized in accordance with the personal workout parameters.

### BRIEF DESCRIPTION OF THE DRAWINGS

The present invention will be understood and appreciated more fully from the following detailed description, taken in conjunction with the drawings in which:
Figs. 1A - 1C are together a simplified pictorial illustration of the operation of a preferred embodiment of the exercise and workout system and methodology of the present invention; and
Figs. 2A - 2C are together a simplified flowchart illustrating the operation of a preferred embodiment of the exercise and workout system and methodology of the present invention.

### DETAILED DESCRIPTION OF A PREFERRED EMBODIMENT

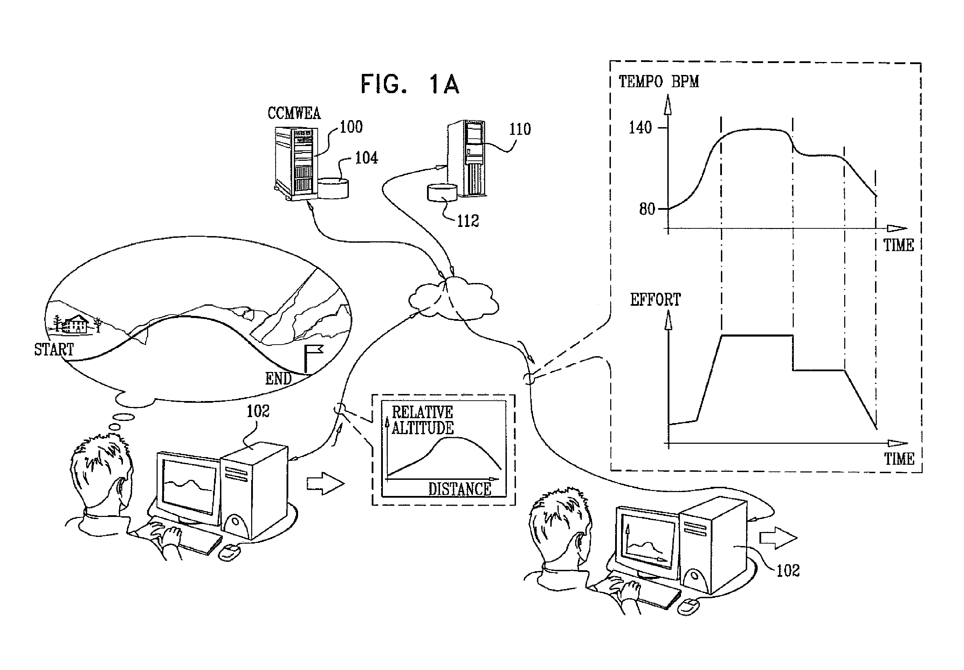

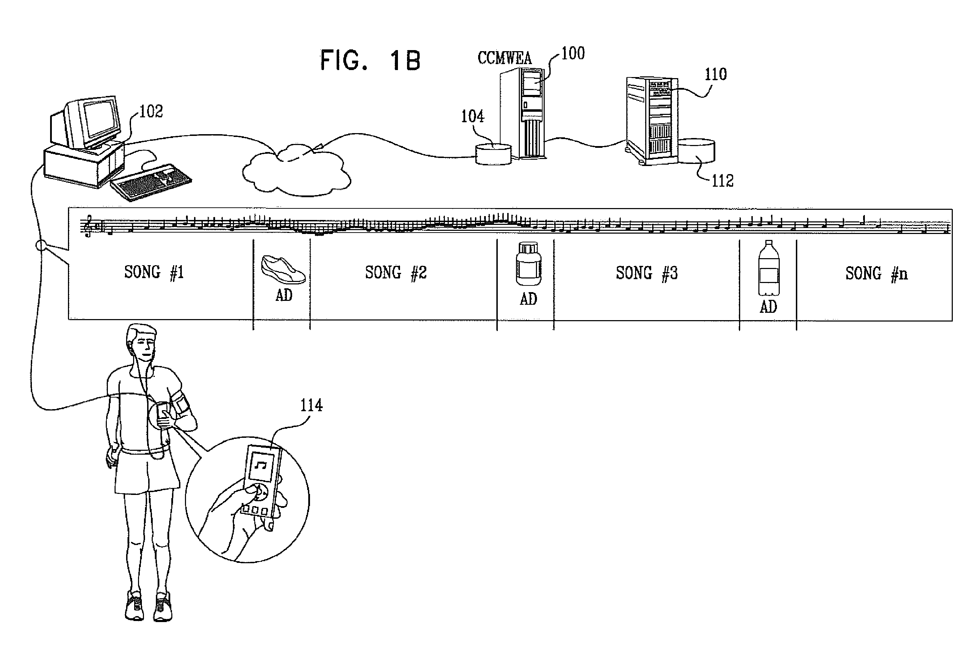

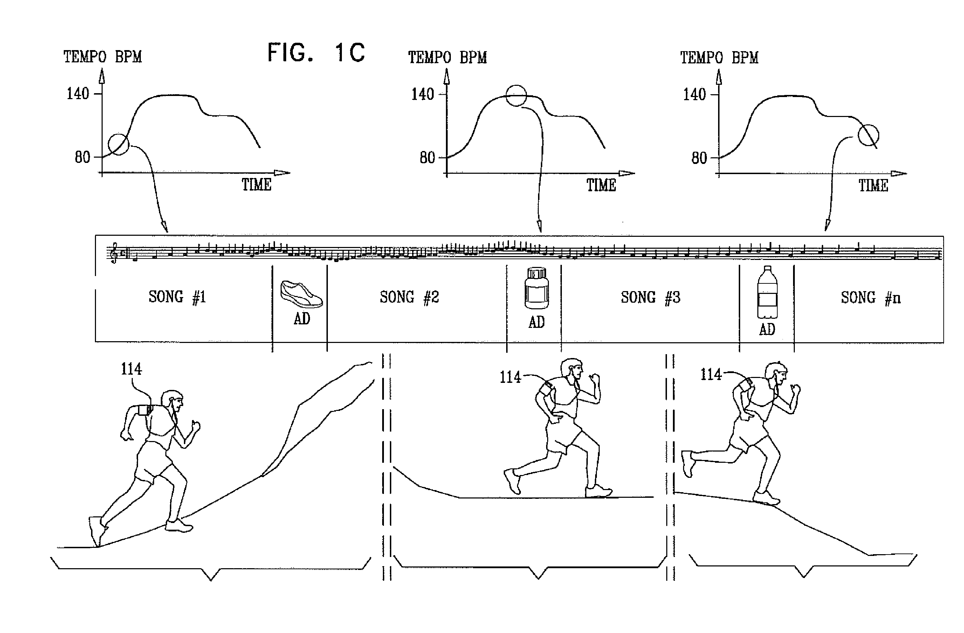

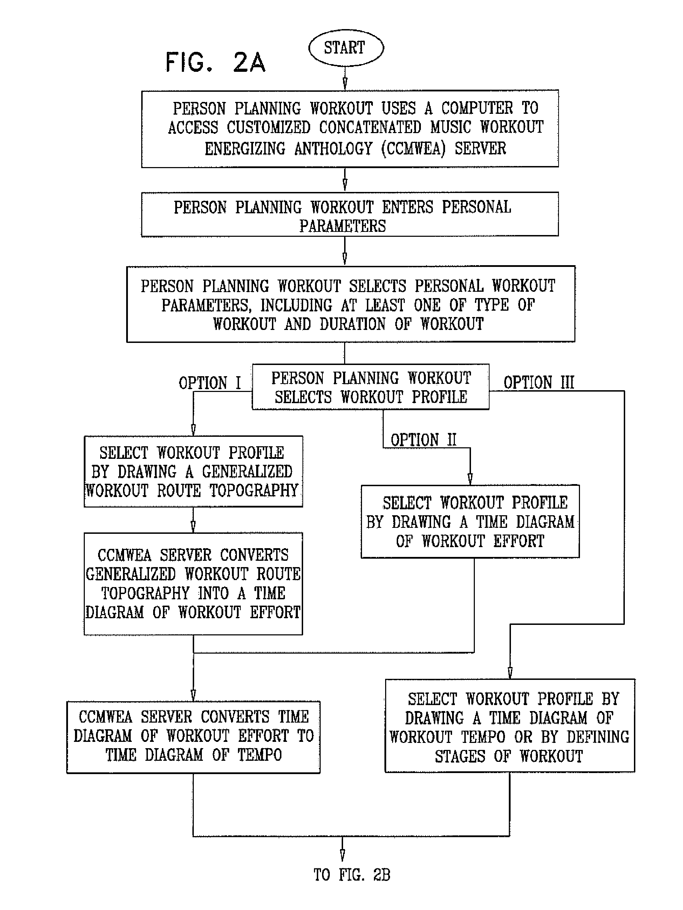

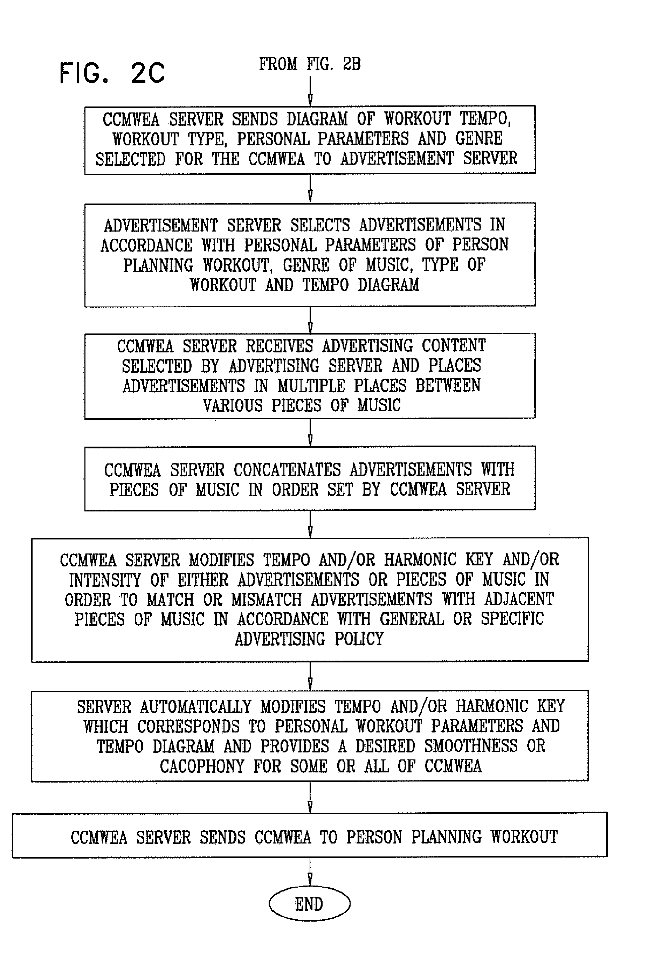

Reference is now made to Figs. 1A - 1C and Figs. 2A - 2C, which together illustrate the operation of a preferred embodiment of the exercise and workout system and methodology of the present invention which provides a customized concatenated music workout-energizing anthology including concatenated advertisements.

As illustrated, the system preferably comprises a customized concatenated music workout-energizing anthology (CCMWEA) generating server 100, which is accessible via a computer network, preferably the internet. A user, such as a jogger, employs a computer 102, such as a PC, or, alternatively, any other suitable computing device, such as a portable communicator, for example a PDA or cellular telephone, to access CCMWEA generating server 100 via the internet.

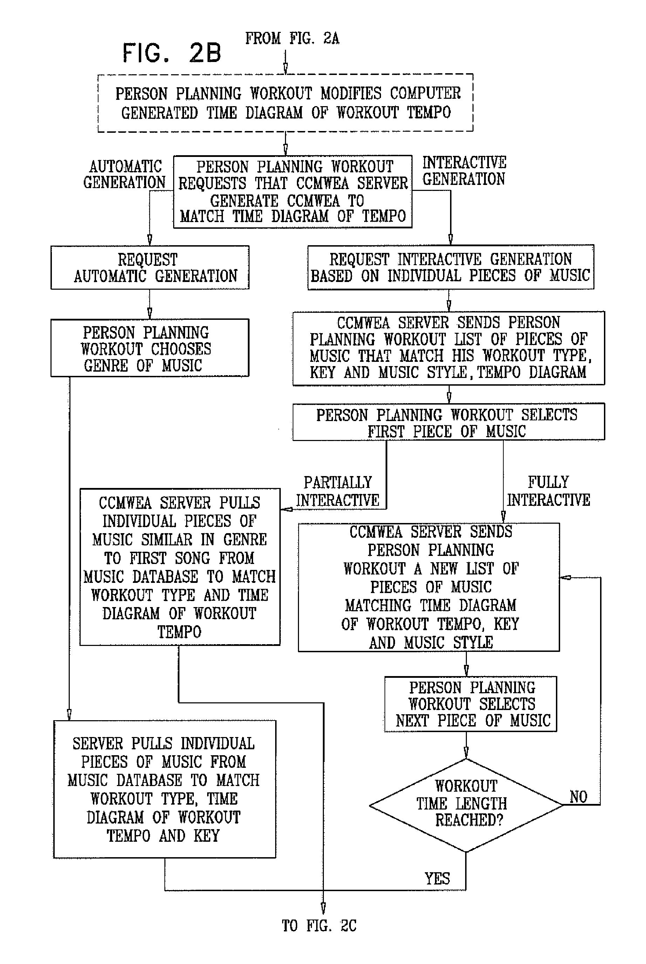

The user is preferably prompted to enter into server 100, via a suitable user interface, which may reside on the user's computer 102, personal parameters, such as gender, age and location, as well as personal workout parameters, including at least one of type of workout and duration of workout. In the illustrated embodiment, which shows one example of a suitable user interface, the user can enter parameters of the topography and expected timing and distance of various stages along his proposed workout course in a graphical format. Alternatively, the person planning the workout may enter a time diagram of the anticipated workout effort or, as a further alternative, the person planning the workout may enter a time diagram of workout tempo or may define the stages of the workout. As an additional alternative, the user may simply enter the type of workout. In all such cases, CCMWEA generating server 100 generates a desired time diagram of workout tempo. This time diagram is preferably subject to modification by the user, as seen in Fig. 2B.

CCMWEA generating server 100 interprets these parameters and selects pieces of music whose tempos are preferably adapted to energize the jogger appropriately at the various stages of the jogging course. CCMWEA generating server 100 may also select a harmonic key which is adapted to appropriately energize the jogger at the various stages of the jogging course.

The user, who is normally the person planning the workout, may request that CCMWEA generating server 100 automatically generate a customized concatenated music workout-energizing anthology (CCMWEA). In such a case, the user is prompted to choose a genre of music, including, for example, style, period and artist.

CCMWEA generating server 100 cooperates with a music database 104, such as for example, ITUNES®, and selects multiple pieces of music stored in the database 104 which are preferably suitable for energizing the jogger appropriately at the various stages of the jogging course, in accordance with the time diagram of workout tempo. In selecting the multiple pieces of music, CCMWEA generating server 100 preferably takes into account user preferences regarding the genre of music.

Alternatively, the user may select pieces of music on an individual basis and in a given order, with the assistance of the CCMWEA generating server 100 which provides a list of available pieces of music suitable for the workout type and the time diagram of workout tempo. The user may be prompted to make sequential choices of pieces of music from this list. Alternatively, following the user's selection of a first piece of music, the CCMWEA generating server 100 automatically completes the CCMWEA.

In accordance with a preferred embodiment of the present invention, there is provided an advertising server 110, which cooperates with an advertising database 112 and communicates with CCMWEA generating server 100 and with other computers, such as advertising agency computers (not shown), preferably via the internet. The advertising server 110 and advertising database 112 preferably store musical advertisements for a plurality of advertisers.

Preferably, the advertisement server 110 also receives, from one or more advertising agency computers, target demographics, preferred advertisement appearance frequencies and dates of expiration of advertisements. The advertisements are preferably sorted or sortable by user personal parameters and preferences as well as by workout type and workout stage. Thus, for example, the content, style and timing of advertisements may be selectable according to any one or more of the age, location and gender of the user, as well as according to the genre of music selected by the user for the workout, the type of workout, its duration and the stage of the workout at which the advertisement is played. Alternatively, advertising server 110 may be integrated with the CCMWEA generating server 100.

Thus, for example, advertisements for jogging shoes may be played during a jogging workout while advertisements for bicycle shoes may be played during a bicycle or spinning workout. An advertisement for a protein supplement may be played during maximum effort portions of a workout and an advertisement for a refreshing energy drink may be played at the end of a workout.

Advertiser preferences or instructions, such as preferences regarding frequency of play and demographics, are preferably received by the advertisement server 110 and are taken into account in selecting the advertisements provided by the advertisement server 110 and advertisement database 112 to the CCMWEA generating server 100.

In accordance with a preferred embodiment of the present invention, the CCMWEA generating server 100 concatenates the multiple pieces of music in an order which is adapted to correspond to the personal workout parameters entered by the user. In accordance with a preferred embodiment of the present invention, suitable advertisements are preferably received from the advertising server 110 and advertising database 112 by the CCMWEA generating server 100 and preferably are concatenated with the multiple pieces of music at desired advertisement concatenation locations.

In accordance with a preferred embodiment of the present invention, the CCMWEA generating server 100 automatically modifies the tempo and/or the harmonic key of at least some of the concatenated multiple pieces of music and advertisements to provide a tempo and, preferably, to also provide a harmonic key which corresponds to the personal workout parameters and provides a desired smoothness or cacophony for some or all of the CCMWEA. It is appreciated that the changes in tempo may be made to all or parts of pieces of music and advertisements, such as the beginnings or ends thereof. Gradual changes in tempo throughout all or part of a piece of music may also be made, such as to adapt to a desired increase or decrease in user effort.

The resulting customized concatenated music workout-energizing anthology may be downloaded by the user to a suitable workout-energizing device, which may be computer 102 or a portable audio output device 114, such as an IPOD® or IPHONE®. Preferably, the download is useful for a limited time, such as one month, after which the customized concatenated music workout-energizing anthology is automatically erased or rendered unplayable.

As seen figuratively in Figs. 1A-1C, preferably the tempo of the customized concatenated music workout-energizing anthology heard by the user varies in accordance with the workout parameters entered by the user, in this case, the topography of the jogging course. In accordance with an embodiment of the invention, a desired match or mismatch between various concatenated pieces of music and advertisements may be provided. A desired match may be provided in order to provide smooth transitions between pieces of music adjacent in time. A desired mismatch in tempo and/or key may be provided at certain times in order to jar the user, either to shift to a tempo matching a desired increased level of effort and/or to draw the user's attention to a given advertisement.

It will be appreciated by persons skilled in the art that the present invention is not limited what has been particularly described hereinabove but also includes combinations and subcombinations of various features described as well as modifications thereof which would be apparent to persons skilled in the art upon reading the foregoing and which are not in the prior art.

## Claims

1. A method for providing a customized concatenated music workout-energizing anthology, the method comprising:
entering into a computer, via a user interface, personal workout parameters including at least one of type of workout and duration of workout;
employing said computer to select multiple pieces of music from a music database;
employing said computer to concatenate said multiple pieces of music in an order which is adapted to correspond to said personal workout parameters;
entering into said computer, via an advertiser interface, audio advertisement content;
employing said computer to concatenate advertisements, including at least part of said audio advertisement content, at advertisement concatenation locations between various ones of said multiple pieces of music; and
employing said computer to download to a portable workout-energizing device a resulting customized concatenated music workout-energizing anthology.

2. A method for providing a customized concatenated music workout-energizing anthology according to claim 1 and also comprising employing said computer to modify the key of at least some of ones of said multiple pieces of music and advertisements.

3. A method for providing a customized concatenated music workout-energizing anthology according to claim 2 and also comprising:
employing said computer to modify at least some of ones of said multiple pieces of music and advertisements to provide a tempo which corresponds to said personal workout parameters.

4. A method for providing a customized concatenated music workout-energizing anthology according to claim 3 and wherein said employing said computer to modify at least some of ones of said multiple pieces of music and advertisements to provide a tempo comprises at least one of tempo matching and harmonic matching between an advertisement and music concatenated therewith.

5. A method for providing a customized concatenated music workout-energizing anthology according to claim 1 and also comprising:
employing said computer to modify at least some of ones of said multiple pieces of music and advertisements to provide a tempo which corresponds to said personal workout parameters.

6. A method for providing a customized concatenated music workout-energizing anthology according to claim 5 and wherein said employing said computer to modify at least some of ones of said multiple pieces of music and advertisements to provide a tempo comprises at least one of tempo matching and harmonic matching between an advertisement and music concatenated therewith.

7. A method for providing a customized concatenated music workout-energizing anthology according to claim 1 and wherein said advertisements are customized in accordance with said personal workout parameters.

8. A system for providing a customized concatenated music workout-energizing anthology, the system comprising:
audio advertisement storage functionality; and
a computer operative to receive, via a user interface, personal workout parameters including at least one of type of workout and duration of workout, to select multiple pieces of music from a music database and to receive audio advertisements, said computer including concatenation functionality operative to concatenate said audio advertisements at advertisement concatenation locations between various ones of said multiple pieces of music and download functionality operative to download to a portable workout-energizing device a resulting customized concatenated music workout-energizing anthology.

9. A system for providing a customized concatenated music workout-energizing anthology according to claim 8 and wherein said computer is also operative to modify the key of at least some of ones of said multiple pieces of music and advertisements.

10. A system for providing a customized concatenated music workout-energizing anthology according to claim 9 and wherein said computer is also operative to modify at least some of ones of said multiple pieces of music and advertisements to provide a tempo which corresponds to said personal workout parameters.

11. A system for providing a customized concatenated music workout-energizing anthology according to claim 10 and wherein said computer comprises at least one of tempo matching functionality and harmonic matching functionality operative to provide at least one of tempo matching and harmonic matching between an advertisement and music concatenated therewith.

12. A system for providing a customized concatenated music workout-energizing anthology according to claim 8 and wherein said computer is also operative to modify at least some of ones of said multiple pieces of music and advertisements to provide a tempo which corresponds to said personal workout parameters.

13. A system for providing a customized concatenated music workout-energizing anthology according to claim 12 and wherein said computer comprises at least one of tempo matching functionality and harmonic matching functionality operative to provide at least one of tempo matching and harmonic matching between an advertisement and music concatenated therewith.

14. A system for providing a customized concatenated music workout-energizing anthology according to claim 8 and wherein said advertisements are customized in accordance with said personal workout parameters.
